Europäisches Patentamt

European Patent Office

Office européen des brevets

(11) Veröffentlichungsnummer: **0 388 354**

**A1**

(12) ## EUROPÄISCHE PATENTANMELDUNG

(21) Anmeldenummer: **90810155.3**

(22) Anmeldetag: **01.03.90**

(51) Int. Cl.⁵: **B01D 69/12, B01D 53/22, B01D 61/36**

(30) Priorität: **08.03.89 CH 851/89**

(43) Veröffentlichungstag der Anmeldung:
**19.09.90 Patentblatt 90/38**

(84) Benannte Vertragsstaaten:
**AT BE CH DE DK ES FR GB GR IT LI LU NL SE**

(71) Anmelder: **ALUSUISSE-LONZA SERVICES AG**
**Feldeggstrasse 4**
**CH-8034 Zürich(CH)**

Anmelder: **FRAUNHOFER-GESELLSCHAFT**
**ZUR FÖRDERUNG DER ANGEWANDTEN**
**FORSCHUNG E.V.**
**Leonrodstrasse 54**
**D-8000 München 19(DE)**

(72) Erfinder: **Franschitz, Wilhelm**
**Büchelerstrasse 12**
**CH-8212 Neuhausen(CH)**
Erfinder: **Oerkenyi, Geza**
**Neustrasse 23**
**CH-8248 Flurlingen(CH)**
Erfinder: **Werner, Martin**
**Hansjakobstrasse 16**
**D-7700 Singen(DE)**
Erfinder: **Chmiel, Horst**
**Paracelsusstrasse 14**
**D-7250 Leonberg(DE)**
Erfinder: **Kimmerle, Klaus**
**Schiltacherstrasse 31**
**D-7000 Stuttgart 80(DE)**
Erfinder: **Strathmann, Heinrich**
**Milanweg 15**
**D-7400 Tübingen(DE)**

(54) **Kompositmembran für die Gastrennung und die Pervaporation.**

(57) Die Kompositmembran besteht aus einer porösen Aluminiumfolie als Trägerschicht und einer porenfreien Polymerdeckschicht. Als poröse Aluminiumfolien eignen sich Mikrofiltrations- und Ultrafiltrationsmembranen.

Durch die hohe Temperaturstabilität und die vollständige Resistenz gegenüber organischen Lösungsmitteln erfüllen die Aluminiumfolien Anforderungen, die für einen erfolgreichen Einsatz als Trägerstruktur von Kompositmembranen ausschlaggebend sind.

Die Erfindung betrifft eine Kompositmembran für die Gastrennung und die Pervaporation, mit einer porösen Trägerstruktur und einer porenfreien Polymerdeckschicht.

Für die Abtrennung von suspendierten Teilchen und die Konzentrierung und Fraktionierung von makromolekularen Lösungen mittels Membrantechnik werden heute Porenmembranen mit symmetrischer oder asymmetrischer Porenstruktur eingesetzt. Die Porengrösse richtet sich dabei nach der Grösse der abzutrennenden Komponente. Die auf der hydrostatischen Druckdifferenz als treibende Kraft basierenden Mikrofiltrations- und Ultrafiltrationsmembranen besitzen Porenradien von typisch 0.1 - 20 µm bzw. 1 - 100 nm. Für diese Prozesse stehen heute eine Reihe symmetrischer oder asymmetrischer Polymer-Porenmembranen zur Verfügung. Daneben werden anorganische Membranen für diese Prozesse verwendet, insbesondere solche aus Keramik, Glas oder Metallen.

Für die Trennung von gasförmigen oder flüssigen Gemischen mittels Membrantechnik sind i.a. sogenannte Löslichkeitsmembranen erforderlich, bei denen die Stofftrennung durch Löslichkeit und Diffusion in einer homogenen, porenfreien Polymerschicht bestimmt wird. Vorzugsweise werden hier entweder asymmetrische Löslichkeitsmembranen eingesetzt, bei denen eine poröse Struktur kurz unterhalb der Oberfläche in eine dünne geschlossene Schicht mündet, oder Kompositmembranen aus einer porösen Trägerstruktur, auf die eine dünne selektive Trennschicht aufgebracht wird. Als Membranmaterialien für die integralasymmetrischen Membranen werden z.B. Cellulosederivate, Polyamid oder Polysulfone eingesetzt. Kompositmembranen basieren häufig auf porösem Polysulfon als Trägerstruktur und Silicon (z.B. Polydimethylsiloxan), Polyamid oder Polyäther als selektive Schicht.

Anwendungen im Bereich Gastrennung sind z.B. die Produktion von sauerstoff- bzw. stickstoffangereicherter Luft, die Wasserstoffrückgewinnung bei der Ammoniaksynthese, die Trennung von Kohlendioxid/Methan-Mischungen und die Entfernung und Rückgewinnung von organischen Lösungsmitteldämpfen aus Abluft. Auf dem Gebiet der Pervaporation lassen sich solche Löslichkeitsmembranen insbesondere für die Auftrennung azeotroper Flüssigkeitsmischungen (z.B. Ethanol/Wasser-Mischungen) einsetzen.

Die heute in der Gastrennung und Pervaporation eingesetzten Polymermembranen weisen jedoch in gewissen Einsatzgebieten entscheidende Nachteile auf. Die verwendeten Polymermaterialien sind einerseits thermisch sehr beschränkt stabil, so dass Anwendungen bei höheren Temperaturen nicht in Frage kommen. Anderseits neigt der porös-strukturierte Membrananteil solcher Membranen oft dazu, im Kontakt mit Wasser, Wasserdampf und/oder organischen Lösungsmitteln oder deren Dämpfen strukturelle Aenderungen (z.B. Quellen) zu erleiden, die sich nachteilig auf die erzielbaren Volumenflüsse auswirken oder im Langzeiteinsatz sogar zu einem vollständigen Verlust der Trenneigenschaften führen können.

Angesichts dieser Gegebenheiten haben sich die Erfinder das Ziel gesetzt, eine für die erwähnten Einsatzgebiete geeignete Kompositmembran bereitzustellen.

Erfindungsgemäss wird die Aufgabe gelöst durch die Merkmale von Anspruch 1. Weitere Merkmale der Erfindung ergeben sich aus den Unteransprüchen.

Dass mikroporöse, teildurchlässige Membranfolien aus Aluminium durch geeignete, auf das Einsatzgebiet (z.B. Mikrofiltration, Ultrafiltration) abgestimmte Aetzverfahren hergestellt werden können, ist beispielsweise aus der EP-A-0 224 444 und der EP-A-0 224 443 bekannt.

Diese Aluminiummembranen haben gegenüber Polymermembranen den Vorteil erhöhter Temperaturstabilität (bis mind. 400° C) und vollständiger Resistenz gegenüber organischen Lösungsmitteln. Strukturänderungen durch Absorption organischer Lösungsmittel treten nicht auf. Damit erfüllen diese Aluminiummembranen Anforderungen, die für einen erfolgreichen Einsatz als Trägerstruktur von Kompositmembranen in den erwähnten Einsatzgebieten ausschlaggebend sind.

Da die bei der Herstellung von Kompositmembranen aufgebrachten Trennschichten fehlstellenfrei und im Hinblick auf die Leistungsfähigkeit der Membran möglichst dünn sein sollten, sind hohe Ansprüche an die Porenstruktur und Oberflächenrauhigkeit zu stellen. Insbesondere dürfen im Verlauf der Aetzung der Aluminiumfolie keine grösseren Lochfrassstellen oder Poren entstehen, da diese zu Fehlstellen der selektiven Polymerschicht während der Beschichtung oder im Einsatz der Membran führen können. Die in der EP-A-0 224 444 und der EP-A-0 224 443 aufgeführten Aetzverfahren sind für die Erzielung einer definierten Porenstruktur mit enger Porendurchmesserverteilung und relativ geringer Oberflächenrauhigkeit geeignet.

Falls als Substrat eine Aluminiumfolie vom Mikrofiltrationstyp mit Porendurchmessern im Bereich von 0.1 - 10 µm verwendet wird, kann es erforderlich sein, die Poren der Folie von der Rückseite her mit einer geeigneten Lösung zu füllen. Dadurch können die Porenwände der Trägerstruktur z.B. gezielt hydrophilisiert werden. Bei der nachfolgenden Beschichtung der Vorderseite der Folie mit einer hydrophoben Polymerlösung kann dadurch das unerwünschte Eindringen dieser Lösung verhindert werden; die Schichtbildung beschränkt sich damit wunschgemäss auf die unmittelbare Oberfläche der Substratfolie.

Zur Beschichtung der Aluminiumfolie können eine Reihe bekannter Verfahren verwendet werden wie z.B. das Aufsprühen, Aufgiessen oder Aufwalzen der Polymerlösung. Mittels Ziehstab oder Walzen kann die Menge der aufgetragenen Polymerlösung gezielt eingestellt werden, die zusammen mit der gewählten Konzentration an Polymer die nach dem Verdampfen des Lösungsmittels erreichte Schichtstärke bestimmt.

Eine weitere Bedingung für einen erfolgreichen Einsatz von Aluminium-Polymer-Kompositmembranen ist eine gute Verbundhaftung, die auch unter den thermischen und chemischen Beanspruchungen im Laufe des praktischen Einsatzes gegeben sein muss. Zur Verbesserung der Verbundhaftungsbeständigkeit stehen eine Reihe bekannter Oberflächenbehandlungen zur Verfügung, wie sie in der EP-A- 0 224 444 und der EP-A-0 224 443 beschrieben sind, z.B. das Aufbringen von korrosionsbeständigen Chromat- oder Phosphatschichten oder die Anodisation in geeigneten Elektrolyten (z.B. (NH₄)H₂PO₄).

**Ansprüche**

1. Kompositmembran für die Gastrennung und die Pervaporation, mit einer porösen Trägerstruktur und einer porenfreien Polymerdeckschicht, dadurch gekennzeichnet, dass die Trägerstruktur aus einer porösen Aluminiumfolie besteht.

2. Kompositmembran nach Anspruch 1, dadurch gekennzeichnet, dass die poröse Aluminiumfolie eine Mikrofiltrationsmembran mit Porendurchmessern im Bereich von 0.1 bis 10 $\mu$m ist.

3. Kompositmembran nach Anspruch 1, dadurch gekennzeichnet, dass die poröse Aluminiumfolie eine Ultrafiltrationsmembran mit Porendurchmessern im Bereich von 1 bis 100 nm ist.

4. Kompositmembran nach einem der Ansprüche 1 bis 3, dadurch gekennzeichnet, dass die poröse Aluminiumfolie durch beidseitige, chemische und/oder elektrochemische Aetzung hergestellt ist.

5. Kompositmembran nach einem der Ansprüche 1 bis 3, dadurch gekennzeichnet, dass die poröse Aluminiumfolie zur Erzielung einer asymmetrischen Porenstruktur durch einseitige, chemische und/oder elektrochemische Aetzung hergestellt ist.

6. Kompositmembran nach einem der Ansprüche 1 bis 5, dadurch gekennzeichnet, dass die Oberfläche der porösen Aluminiumfolie zur Verbesserung der Haftung gegenüber der Polymerdeckschicht mit einer chemisch oder elektrochemisch erzeugten Konversionsschicht versehen ist.

7. Kompositmembran nach einem der Ansprüche 1 bis 6, dadurch gekennzeichnet, dass die Polymerdeckschicht aus Silicon, insbesondere Polydimethylsiloxan, Polyamid oder Polyäther besteht.

8. Kompositmembran nach einem der Ansprüche 1 bis 7, dadurch gekennzeichnet, dass die Polymerdeckschicht durch Aufsprühen, Aufgiessen oder Aufwalzen von Polymerlösungen geeigneter Konzentration und Verdampfung des Lösungsmittels erzeugt ist.

9. Kompositmembran nach einem der Ansprüche 1 bis 8, dadurch gekennzeichnet, dass die Poren der porösen Aluminiumfolie zur Verhinderung des Eindringens hydrophober Polymerlösungen während des Beschichtungsvorganges in die Porenstruktur hydrophilisiert sind.

10. Verwendung einer Kompositmembran nach wenigstens einem der Ansprüche 1 bis 9 für die pervaporative Trennung von Flüssigkeitsmischungen, insbesondere Ethanol/Wasser-Mischungen.

11. Verwendung einer Kompositmembran nach wenigstens einem der Ansprüche 1 bis 9 für die Herstellung von stickstoff- und sauerstoffangereicherter Luft durch Gastrennung.

12. Verwendung einer Kompositmembran nach wenigstens einem der Ansprüche 1 bis 9 zur Trennung von $CO_2$'$CH_4$ Gasmischungen.

13. Verwendung einer Kompositmembran nach wenigstens einem der Ansprüche 1 bis 9 für die Abtrennung von organischen Lösungsmittel- und Kohlenwasserstoffdämpfen aus Luft.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 224 444 (SCHWEIZERISCHE ALUMINIUM AG) * Insgesamt, insbes. Patentansprüche 1,15; Zusammenfassung; Spalte 4, Zeilen 34-52 * | 1-6 | B 01 D 69/12 B 01 D 53/22 B 01 D 61/36 |
| Y | --- | 7-9,13 | |
| Y | EP-A-0 242 209 (ALCAN INT. LTD) * Zusammenfassung; Patentansprüche 1,6,7; Seite 3, Zeilen 7-28,47-48; Seite 5, Zeilen 14-16; Seite 6, Zeilen 23-24; Beispiel 11; Seite 7, Zeilen 63-65 * | 1,3,7,8 ,10-12 | |
| Y | --- US-A-3 692 087 (R.E. EBERTS) * Zusammenfassung; Spalte 1, Zeilen 2-5; Spalte 2, Zeilen 59-64; Fig. 5; Beispiel 1 * | 1,3,7,8 ,10-12 | |
| Y | --- GB-A-1 173 179 (S. RUBEN) * Patentansprüche 1,11; Seite 4, Zeilen 22-38 * | 7,8 | |
| A | --- | 1 | RECHERCHIERTE SACHGEBIETE (Int. Cl.5) B 01 D |
| Y | EP-A-0 288 380 (COMM. A L'ENERGIE ATOMIQUE) * Zusammenfassung; Spalte 1, Zeile 53 - Spalte 2, Zeile 6; Spalte 5, Zeilen 43-48 * | 9 | |
| A | --- -/- | 1,2,8 | |

Der vorliegende Recherchenbericht wurde für alle Patentansprüche erstellt

| Recherchenort | Abschlußdatum der Recherche | Prüfer |
|---|---|---|
| DEN HAAG | 14-05-1990 | HOORNAERT P.G.R.J. |

**Europäisches Patentamt**

# EUROPÄISCHER RECHERCHENBERICHT

Nummer der Anmeldung

EP 90 81 0155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 171 879 (MEMBRANE TECHNOL. AND RESEARCH) * Zusammenfassung; Patentansprüche 1,7,8 * --- | 13 | |
| A | WO-A-8 601 425 (FRAUNHOFER GES.) * Zusammenfassung; Patentansprüche 1,5-7,11; Seite 3; Zeilen 1-18; Seite 9, Zeilen 15-21; Figur 2 * --- | 1,7,8, 10 | |
| A | GB-A-2 072 047 (N.S. LIDORENKO) * Zusammenfassung; Patentansprüche 1-3; Seite 3, Zeile 46 - Seite 4, Zeile 43; Figur 1 * --- | 1,2,7,8 | |
| X | PATENT ABSTRACTS OF JAPAN, Band 12, Nr. 270 (C-515)[3117], 20. Juli 1988; & JP-A-63 49 220 (SHOZABURO SAITO) 02-03-1988 & DATABASE WPIL, Derwent Publications Ltd., London, GB; No 88-100667 * Zusammenfassung * ----- | 1,3,11, 12 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| DEN HAAG | 14-05-1990 | HOORNAERT P.G.R.J. |